# EUROPÄISCHE PATENTSCHRIFT

(11) **EP 2 881 219 B1**
(45) Veröffentlichungstag und Bekanntmachung des Hinweises auf die Patenterteilung: **05.09.2018**
(21) Anmeldenummer: 14003517.1
(22) Anmeldetag: 14.10.2014
(51) Int. Cl.: B23Q 3/155, B23Q 3/157

(54) **Werkzeugwechselvorrichtung zur Verwendung in einem Bearbeitungszentrum und Bearbeitungszentrum zur maschinellen Bearbeitung eines Werkstücks**
Tool exchange apparatus for use in a machining centre and machining centre for machining a workpiece
Dispositif de changement d'outil destiné à être utilisé dans un centre d'usinage et centre d'usinage destiné à l'usinage mécanique d'une pièce à usiner

(30) Priorität: 03.12.2013 DE 202013009776 U
(43) Veröffentlichungstag der Anmeldung: 10.06.2015
(73) Patentinhaber: Hedelius Maschinenfabrik GmbH, 49716 Meppen (DE)
(72) Erfinder: Gerdes, Clemens, 49733 Haren (DE)
(74) Vertreter: Von Rohr Patentanwälte Partnerschaft mbB

(56) Entgegenhaltungen:
- EP-A2- 0 293 509
- FR-A1- 2 641 998
- JP-A- 2000 126 968
- US-A- 3 678 572

## Beschreibung

Die vorliegende Erfindung betrifft ein Bearbeitungszentrum zur maschinellen Bearbeitung eines Werkstücks mittels unterschiedlicher Werkzeuge gemäß dem Oberbegriff von Anspruch 1. Ein solches Bearbeitungszentrum ist z.B. aus der US 3,678,572 bekannt. Bearbeitungszentren der in der Rede stehenden Art dienen im Maschinen- und Anlagenbau der Bearbeitung komplizierter Werkstücke an bis zu fünf Seiten bzw. einschließlich eines Umspannvorgangs an bis zu sechs Seiten mittels einer dreiachsigen oder fünfachsigen Bearbeitung. Dabei dient sowohl zur dreiachsigen als auch zur fünfachsigen Bearbeitung ein Fahrständer mit mindestens einer Spindel. Der Fahrständer ist zumeist nach Art eines X-Y-Z-Schlittens aufgebaut. Er kann mit diversen zusätzlichen Spindeln komplettiert werden.

Der Fahrständer arbeitet zusammen mit einer Dreh-Schwenktischeinheit, auf der ein Werkstück aufgespannt ist. Somit lässt sich das Werkstück relativ zur Spindel um seine Hochachse komplett drehen und im Regelfall nach beiden Seiten um 90° schwenken. Zusammen mit der dreiachsigen Führung der Spindel ergibt sich die insgesamt fünfachsige Bearbeitungsmöglichkeit für das auf dem Drehtisch der Dreh-Schwenktischeinheit aufgespannte Werkstück.

Typische Bearbeitungen eines Werkstücks in einem solchen Bearbeitungszentrum sind Umformen, Trennen und Fügen von Werkstücken aus Metall. Grundsätzlich kann ein solches Bearbeitungszentrum auch für die Bearbeitung von Werkstücken aus Kunststoff oder Holz ausgelegt werden. Hauptanwendungsgebiet ist aber die spanende Metallbearbeitung wie Bohren oder Fräsen.

Bei der Spindel der Bearbeitungszentren der in der Rede stehenden Art handelt es sich um eine werkzeugtragende Motorspindel, d.h. in die Spindel ist ein Werkzeug eingesetzt, das von der Spindel während der Bearbeitung des Werkstücks rotiert wird. Dazu weist die Spindel eine Werkzeugschnittstelle auf. Die Werkzeugschnittstelle umfasst eine Werkzeugaufnahme zur Aufnahme eines Werkzeugs sowie einen Werkzeugspanner zur lösbaren Fixierung des Werkzeugs an der Spindel.

Bei solchen Bearbeitungszentren kann ein Wechsel des in der Spindel befindlichen Werkzeugs erforderlich werden, z. B. weil ein andersartiges Werkzeug zur weiteren Bearbeitung des Werkstücks nötig ist oder weil das eingesetzte Werkzeug defekt oder abgenutzt (z. B. stumpf) ist. Zum Wechseln des Werkzeugs kommt bei den Bearbeitungszentren der in Rede stehenden Art eine automatisierte WerkzeugWechselvorrichtung zum Einsatz.

Eine Werkzeugwechselvorrichtung im Sinne der vorliegenden Erfindung dient zur Entnahme eines Werkzeugs aus der Spindel, zum Transport des Werkzeugs zu einem Werkzeugmagazin, zur Übergabe des Werkzeugs an das Werkzeugmagazin, zur Entgegennahme eines anderen Werkzeugs vom Werkzeugmagazin, zum Transport dieses anderen Werkzeugs vom Werkzeugmagazin zur Spindel und zum Einsetzen dieses anderen Werkzeugs in die Spindel.

Eine wichtige Kenngröße einer Werkzeugwechselvorrichtung ist die Werkzeugwechselzeit bzw. die Span-zu-Span-Zeit bei automatischem Werkzeugwechsel (nach VDI-Richtlinie 2852 Blatt 1). Hier wird ein möglichst niedriger Wert angestrebt. Die Span-zu-Span-Zeit hat direkten Einfluss auf die Bearbeitungszeit, also die Zeit zur Bearbeitung des Werkstücks, bzw. die Durchlaufzeit.

Eine Werkzeugwechselvorrichtung zur Verwendung an einem verfahrbaren Fahrständer eines Bearbeitungszentrums zur maschinellen Bearbeitung eines Werkstücks mittels unterschiedlicher Werkzeuge zeigt die DE 10 2011 109 288 A1. Diese Werkzeugwechselvorrichtung weist einen Tragarm auf, der an einem Ende einen Doppelgreifer mit zwei Werkzeugaufnahmen hat. Die Werkzeugaufnahmen des Doppelgreifers sind parallel zueinander ausgerichtet, d. h. die Werkzeugaufnahmen weisen in die gleiche Richtung. Mittels des Tragarms ist ein Werkzeug von einem Werkzeugmagazin des Bearbeitungszentrums zu einer an einem Fahrständer des Bearbeitungszentrums angebrachten, verfahrbaren Spindel und zurück transportierbar.

Bei der bekannten Werkzeugwechselvorrichtung ist der Tragarm um eine Schwenkachse schwenkbar und als ein aus mehreren Einzelgliedern zusammengesetztes Mehrfachgelenk ausgebildet. Der Tragarm ist von einem linearen Antrieb entlang einer durch die Länge der Einzelglieder und die Anlenkpunkte definierten Kurve zwischen einer Werkzeug-Übergabeposition an dem Werkzeugmagazin und einer Werkzeug-Wechselposition schwenkbar.

Der Doppelgreifer ist an einem der Einzelglieder angeordnet, wobei die beiden Werkzeugaufnahmen des Doppelgreifers nebeneinander, in Richtung der längsten Ausdehnung des Einzelglieds versetzt angeordnet sind.

Ein Werkzeugwechsel wird bei der bekannten Werkzeugwechselvorrichtung folgendermaßen durchgeführt. Zunächst schwenkt der Tragarm zu einer Werkzeug-Übergabeposition am Werkzeugmagazin, Ein Magazingreifer des Werkzeugmagazins entnimmt ein ausgewähltes Werkzeug aus dessen Halterung und befördert es zu der Werkzeug-Übergabeposition, an der es von einer der beiden Werkzeugaufnahmen des Doppelgreifers übernommen wird.

Inzwischen ist die Spindel zu einer Werkzeug-Wechselposition verfahren worden. Der Tragarm der Werkzeugwechselvorrichtung schwenkt nun von der Werkzeug-Übergabeposition am Werkzeugmagazin zu der Werkzeug-Wechselposition. An der Werkzeug-Wechselposition ergreift die leere bzw. unbesetzte Werkzeugaufnahme des Doppelgreifers das zuvor benutzte Werkzeug, das an der Spindel festgeklemmt bzw. in die Spindel eingespannt ist, und nimmt dieses auf.

Daraufhin fährt die Spindel über die Werkzeugaufnahme, die das aus dem Werkzeugmagazin entnommene Werkzeug hält, wobei dann dieses Werkzeug in die Spindel eingeführt und in die Spindel eingespannt wird.

Der Tragarm der Werkzeugwechselvorrichtung bringt dann in einem umgekehrten Bewegungsablauf das benutzte Werkzeug zu der Werkzeug-Übergabeposition am Werkzeugmagazin zurück.

Bei der genannten Werkzeugwechselvorrichtung schwenkt der Tragarm ausschließlich in einer Ebene, und zwar in der horizontalen, also X-Y-Ebene. In vertikaler, also Z-Richtung ist der Tragarm nicht bewegbar. Die zum Werkzeugwechsel nötige Bewegung in Z-Richtung wird von der Spindel ausgeführt, die grundsätzlich in Z-Richtung verfahrbar ist. Somit erspart die bekannte Werkzeugwechselvorrichtung einen Antrieb des Tragarms in Z-Richtung.

Bekannt ist ferner ein Bearbeitungszentrum ähnlicher Art (JP 2000-126968 A), bei dem die Span-zu-Span-Zeit dadurch optimiert ist, dass der Tragarm der Werkzeugwechselvorrichtung um eine Schwenkachse schwenkbar ist, so dass sich der Doppelgreifer des Tragarms auf einem Schwenkkreis bewegt. Die beiden Werkzeugaufnahmen des Doppelgreifers sind in Umfangsrichtung des Schwenkkreises versetzt angeordnet und weisen den gleichen Abstand zum Mittelpunkt des Schwenkkreises auf. Dadurch ist es möglich, allein durch Schwenken des Tragarms die eine Werkzeugaufnahme des Doppelgreifers genau an diejenige Position zu schwenken, die die andere Werkzeugaufnahme des Doppelgreifers vor diesem Schwenken inne hatte.

Bei dem zuvor erläuterten Stand der Technik ist die Span-zu-Span-Zeit gleichwohl noch weiter optimierungsfähig.

Aufgabe der vorliegenden Erfindung ist es somit, das zuvor erläuterte, bekannte Bearbeitungszentrum zur maschinellen Bearbeitung eines Werkstückes mittels unterschiedlicher Werkzeuge hinsichtlich der Span-zu-Span-Zeit weiter zu optimieren.

Die zuvor geschilderte Aufgabenstellung wird durch das erfindungsgemäße Bearbeitungszentrum gemäß Anspruch 1 gelöst. Ausgestaltungen und Weiterbildungen dieser Erfindung sind Gegenstand der jeweiligen Unteransprüche.

Bei der Werkzeugwechselvorrichtung des erfindungsgemäßen Bearbeitungszentrums ist der Tragarm um eine Schwenkachse schwenkbar, so dass sich der Doppelgreifer des Tragarms auf einem Schwenkkreis bewegt. Die beiden Werkzeugaufnahmen des Doppelgreifers sind in Umfangsrichtung des Schwenkkreises versetzt angeordnet. Die beiden Werkzeugaufnahmen des Doppelgreifers weisen den gleichen Abstand zum Mittelpunkt des Schwenkkreises auf.

Das erfindungsgemäße Bearbeitungszentrum weist einen verfahrbaren Fahrständer und eine werkzeugtragende, verfahrbare Spindel auf. Die Spindel ist am Fahrständer angebracht.

Bei einer werkzeugtragenden Spindel ist ein Werkzeug in der Spindel eingespannt und wird rotiert. Üblicherweise wird in diesem Fall das zu bearbeitende Werkstück nicht rotiert.

Ferner weist das Bearbeitungszentrum ein Werkzeugmagazin mit einer Mehrzahl von Werkzeugaufnahmen für verschiedene einzelne Werkzeuge auf.

Erfindungsgemäß weist das Werkzeugmagazin einen Magazingreifer auf. Der Magazingreifer ist zur Entnahme eines Werkzeugs aus einer Werkzeugaufnahme des Werkzeugmagazins und zum Transport eines Werkzeugs zu einer der Werkzeugaufnahmen der Werkzeugwechselvorrichtung bzw. zur Werkzeug-Übergabeposition ausgebildet. Der Magazingreifer ist ferner zum Transport eines Werkzeugs von einer der Aufnahmen der Werkzeugwechselvorrichtung bzw. von der Werkzeug-Übergabeposition zu einer Werkzeugaufnahme des Werkzeugmagazins und zum Einsetzen eines Werkzeugs in eine Werkzeugaufnahme des Werkzeugmagazins ausgebildet.

Bei der Erfindung entnimmt bzw. übergibt die Werkzeugwechselvorrichtung ein Werkzeug nicht direkt aus bzw. an das Werkzeugmagazin. Vielmehr entnimmt der Magazingreifer ein Werkzeug aus einer Werkzeugaufnahme des Werkzeugmagazins und transportiert es zur Werkzeugwechselvorrichtung, die das Werkzeug dann übernimmt. Umgekehrt übernimmt der Magazingreifer ein Werkzeug aus einer der Werkzeugaufnahmen der Werkzeugwechselvorrichtung, transportiert es zum Werkzeugmagazin und setzt es in eine der Werkzeugaufnahmen des Werkzeugmagazins ein.

Bei dem erfindungsgemäßen Bearbeitungszentrum befinden sich die Werkzeugwechselvorrichtung, im Wesentlichen also der Tragarm, sowie das Werkzeugmagazin am Fahrständer und sind mit dem Fahrständer mitfahrend ausgeführt. Dazu weist das Werkzeugmagazin einen ersten Träger auf, der dieses Werkzeugmagazin trägt und am Fahrständer angebracht ist. Der Tragarm und der Magazingreifer sind an einem zweiten Träger des Werkzeugmagazins angebracht.

Diese Verteilung der Aufgaben auf verschiedene, parallel arbeitende Baugruppen des Bearbeitungszentrums ermöglicht besonders kurze Span-zu-Span-Zeiten. Die dargestellte Ausgestaltung ermöglicht im Übrigen eine besonders kompakte Anordnung.

Zum Einsetzen eines Werkzeuges in die Spindel kann die Spindel und/oder die Werkzeugwechselvorrichtung verfahren werden. Vorzugsweise wird die Spindel verfahren, insbesondere in Z-Richtung.

Vorzugsweise ist der Tragarm der Werkzeugwechselvorrichtung des erfindungsgemäßen Bearbeitungszentrums an einem dem Doppelgreifer gegenüberliegenden Ende schwenkbar gelagert. In diesem Fall verläuft die Schwenkachse durch das dem Doppelgreifer gegenüberliegende Ende. Bevorzugt ist der Tragarm von einem Motor über eine Welle antreibbar. Besonders bevorzugt verläuft die Schwenkachse der Werkzeugwechselvorrichtung in Z-Richtung durch das dem Doppelgreifer gegenüberliegende Ende und die Welle. Die Schwenkachse kann aber auch von der Welle beabstandet und durch eine Kulissenführung ersetzt sein und insofern eine "virtuelle" Schwenkachse bilden.

Vorzugsweise sind die beiden Werkzeugaufnahmen des Doppelgreifers als elastische Klauen ausgeführt. Die elastischen Klauen sind so ausgebildet, dass Werkzeuge mit Steil- oder Hohlschaftkegel, insbesondere gemäß DIN 69871 bzw. DIN 69893, eingesetzt werden können.

Häufig ist das Werkzeugmagazin kreisringförmig gestaltet. Es kann aber auch als Kettenmagazin ausgeführt sein, wobei eine Kette auf einer elliptischen Kurve entlang des Außenumfangs eines Karussells verläuft. Das Werkzeugmagazin hat jedenfalls eine Mehrzahl von auf dem Außenumfang einer Basis angeordneten einheitlichen Werkzeugaufnahmen für verschiedene einzelne Werkzeuge, die jedoch einheitliche, zu den Werkzeugaufnahmen passende Aufnahmehalterungen aufweisen. Ein mitfahrendes Werkzeugmagazin ist sowohl vom Platz als auch vom Gewicht her begrenzt. Es hat meist nur eine geringe Anzahl von Werkzeugaufnahmen, häufig nicht mehr als 30 bis 40 Stück. Normalerweise ist das mitfahrende Werkzeugmagazin am Fahrständer von der Rückseite des Bearbeitungszentrums aus bestückbar.

Es ist bevorzugt wenn das Werkzeugmagazin einen Pneumatikzylinder aufweist, mittels dessen der Magazingreifer linear verfahrbar ist. Dies stellt eine kostengünstige, robuste und zuverlässige Ausgestaltung dar.

Vorzugsweise ist das Werkzeugmagazin derart ausgebildet, dass der Magazingreifer bei einem Werkzeugwechsel in einer zur Ebene des Schwenkkreises parallelen Ebene verfahrbar ist. Dies erspart eine Verfahrvorrichtung, die den Magazingreifer in eine die Ebene des Schwenkkreises schneidende Richtung, insbesondere senkrecht zur Ebene des Schwenkkreises, verfährt. Dies führt zu günstigen Herstellungskosten, ohne die Funktionalität zu verschlechtern.

Die Begriffe "X-Richtung", "Y-Richtung", "Z-Richtung", "X-Y-Ebene" usw. werden im Rahmen der vorliegenden Erfindung so verwendet, wie sie üblicherweise in einem kartesischen Koordinatensystem verwendet werden. In der Zeichnung verläuft die X-Richtung in die Zeichnungsebene hinein und aus der Zeichnungsebene heraus, die Y-Richtung von links nach rechts und umgekehrt und die Z-Richtung von oben nach unten und umgekehrt. Da der Fahrständer des erfindungsgemäßen Bearbeitungszentrums nach Art eines X-Y-Z-Schlittens aufgebaut ist, können auch dessen X-Schlitten, Y-Schlitten und Z-Schlitten zur Orientierung herangezogen werden.

Die Erfindung wird nachfolgend anhand der Erläuterung eines bevorzugten Ausführungsbeispiels mit Bezugnahme auf die Zeichnung näher erläutert.

In der Zeichnung zeigt:
- Fig. 1: schematisch in einer perspektivischen Ansicht einen Ausschnitt einer bevorzugten Ausführungsform des erfindungsgemäßen Bearbeitungszentrums mit einer Werkzeugwechselvorrichtung im Zustand zu Beginn eines Werkzeugwechsels sowie eine Vergrößerung des mit A gekennzeichneten Bereichs,
- Fig. 2: schematisch in einer perspektivischen Ansicht einen Ausschnitt des Bearbeitungszentrums aus Fig. 1 in einem nachfolgenden Zustand während eines Werkzeugwechsels sowie eine Vergrößerung des mit B gekennzeichneten Bereichs,
- Fig. 3: schematisch in einer perspektivischen Ansicht einen Ausschnitt des Bearbeitungszentrums aus Fig. 2 in einem nachfolgenden Zustand während eines Werkzeugwechsels sowie eine Vergrößerung des mit C gekennzeichneten Bereichs,
- Fig. 4: schematisch in einer perspektivischen Ansicht einen Ausschnitt des Bearbeitungszentrums aus Fig. 3 in einem nachfolgenden Zustand während eines Werkzeugwechsels sowie eine Vergrößerung des mit D gekennzeichneten Bereichs,
- Fig. 5: schematisch in einer perspektivischen Ansicht einen Ausschnitt des Bearbeitungszentrums aus Fig. 4 in einem nachfolgenden Zustand während eines Werkzeugwechsels,
- Fig. 6: schematisch in einer perspektivischen Ansicht einen Ausschnitt des Bearbeitungszentrums aus Fig. 5 in einem nachfolgenden Zustand während eines Werkzeugwechsels,
- Fig. 7: schematisch in einer perspektivischen Ansicht einen Ausschnitt des Bearbeitungszentrums aus Fig. 6 in einem nachfolgenden Zustand während eines Werkzeugwechsels,
- Fig. 8: schematisch in einer perspektivischen Ansicht einen Ausschnitt des Bearbeitungszentrums aus Fig. 7 in einem nachfolgenden Zustand während eines Werkzeugwechsels,
- Fig. 9: schematisch in einer perspektivischen Ansicht einen Ausschnitt des Bearbeitungszentrums aus Fig. 8 in einem nachfolgenden Zustand während eines Werkzeugwechsels,
- Fig. 10: schematisch in einer perspektivischen Ansicht einen Ausschnitt des Bearbeitungszentrums aus Fig. 9 in einem nachfolgenden Zustand während eines Werkzeugwechsels,
- Fig. 11: schematisch in einer perspektivischen Ansicht einen Ausschnitt des Bearbeitungszentrums aus Fig. 10 in einem nachfolgenden Zustand während eines Werkzeugwechsels.

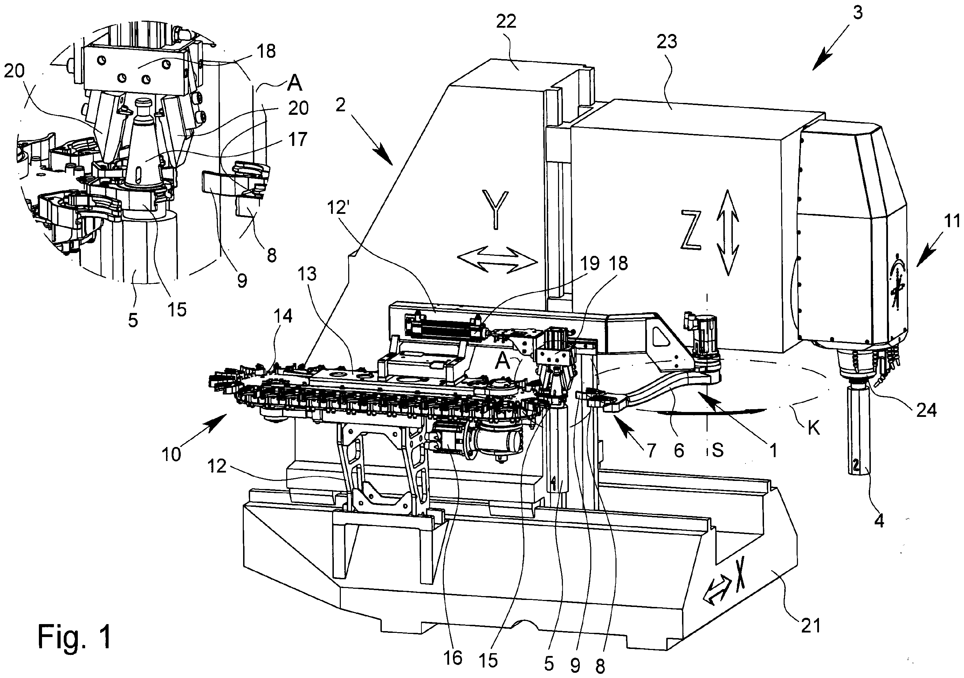

Die Fig. 1 zeigt schematisch in einer perspektivischen Ansicht einen Ausschnitt einer bevorzugten Ausführungsform der Werkzeugwechselvorrichtung 1 zur Verwendung an einem verfahrbaren Fahrständer 2 eines erfindungsgemäßen Bearbeitungszentrums 3 zur maschinellen Bearbeitung eines nicht dargestellten Werkstücks, insbesondere zur spanabhebenden Metallbearbeitung wie Fräsen und/oder Bohren, mittels unterschiedlicher Werkzeuge 4, 5.

Die in Fig. 1 dargestellten Bauteile befinden sich in einem von mehreren Arbeitsräumen des Bearbeitungszentrums 3 innerhalb einer Schutzverkleidung.

Die Werkzeugwechselvorrichtung 1 weist einen Tragarm 6 auf. Der Tragarm 6 weist an einem Ende einen Doppelgreifer 7 mit zwei Werkzeugaufnahmen 8, 9 auf. Die Werkzeugaufnahmen 8, 9 des Doppelgreifers 7 sind parallel zueinander ausgerichtet. Die Formulierung "parallel zueinander ausgerichtet" ist dabei so zu verstehen, dass die Öffnung, die die eine Werkzeugaufnahme 8 aufweist, in die gleiche Richtung zeigt wie die Öffnung, die die andere Werkzeugaufnahme 9 aufweist. Eine Gerade entlang der Öffnung der einen Werkzeugaufnahme 8 verläuft also parallel zu der Geraden entlang der Öffnung der anderen Werkzeugaufnahme 9.

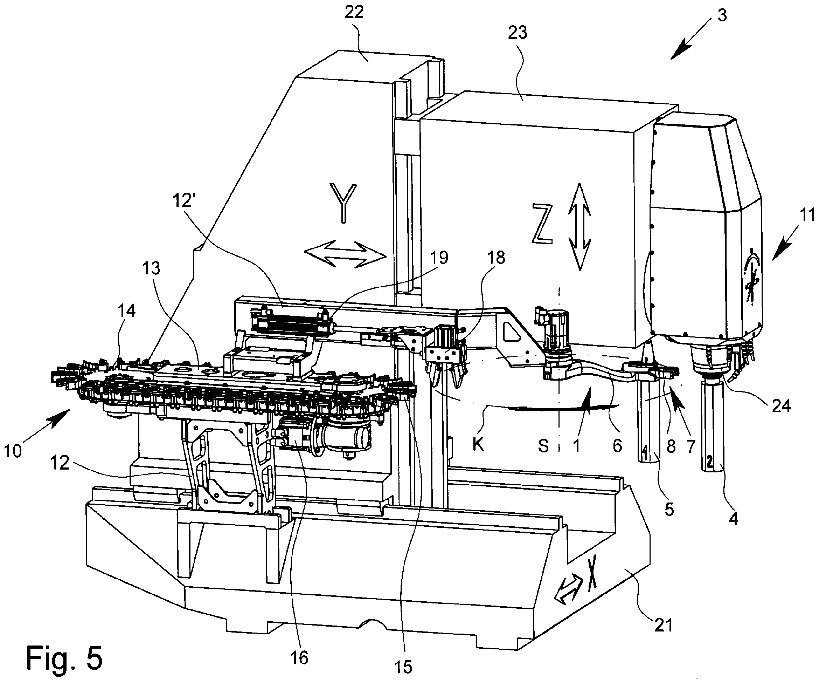

Mittels des Tragarms 6 ist ein Werkzeug 5 (maximal zwei Werkzeuge 4, 5) von einem Werkzeugmagazin 10 des Bearbeitungszentrums 3 bzw. von einer ersten Werkzeug-Übergabeposition des Doppelgreifers 7 zu einer am Fahrständer 2 des Bearbeitungszentrums 3 angebrachten, verfahrbaren, werkzeugtragenden Spindel 11 bzw. einer ersten Werkzeug-Wechselposition des Doppelgreifers 7 transportierbar. Die erste Werkzeug-Übergabeposition des Doppelgreifers 7 lässt sich in Fig. 1 lokalisieren, nämlich an der Stelle, an der sich der Doppelgreifer 7 der Werkzeugwechselvorrichtung 1 in Fig. 1 befindet. Die erste Werkzeug-Wechselposition des Doppelgreifers 7 ist in Fig. 5 gezeigt.

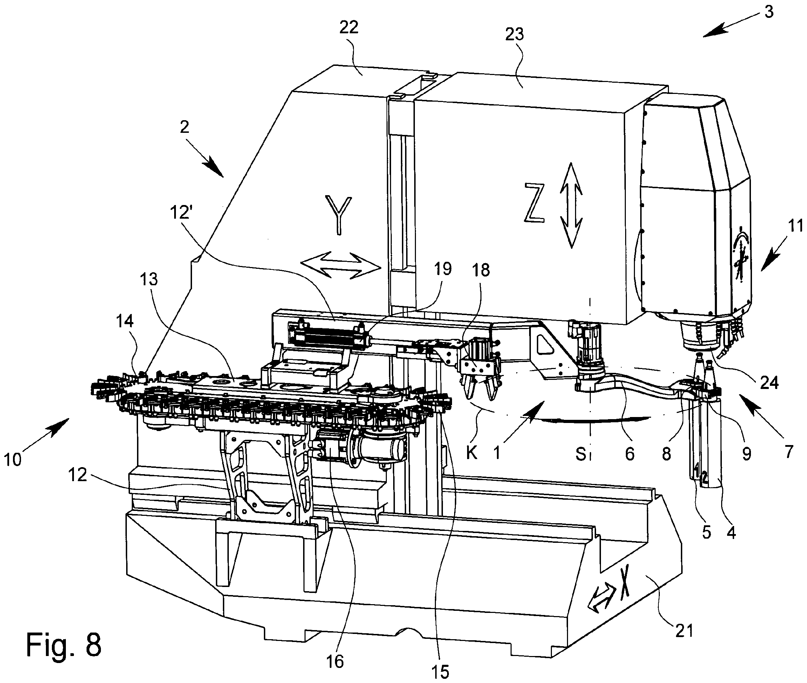

Mittels des Tragarms 6 sind zwei Werkzeuge 4, 5 von der ersten Werkzeug-Wechselposition des Doppelgreifers 7 zu einer zweiten Werkzeug-Wechselposition des Doppelgreifers 7 transportierbar. Die zweite Werkzeug-Wechselposition des Doppelgreifers 7 ist in Fig. 8 gezeigt.

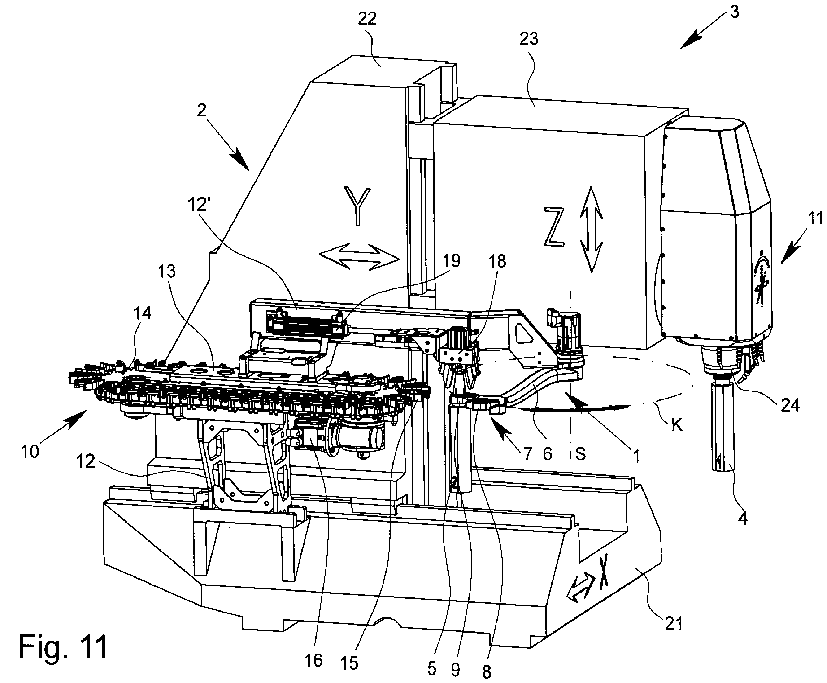

Mittels des Tragarms 6 ist ferner ein Werkzeug 5 von der zweiten Werkzeug-Wechselposition des Doppelgreifers 7 zu einer zweiten Werkzeug-Übergabeposition des Doppelgreifers 7 transportierbar. Die zweite Werkzeug-Übergabeposition des Doppelgreifers 7 ist in Fig. 11 gezeigt.

Der Tragarm 6 ist um eine Schwenkachse S schwenkbar, so dass sich der Doppelgreifer 7 auf einem Schwenkkreis K bzw. einem Kreisbogen des Schwenkkreises K bewegt. Die beiden Werkzeugaufnahmen 8, 9 des Doppelgreifers 7 sind in Umfangsrichtung des Schwenkkreises K versetzt angeordnet. Der Versatz beträgt vorzugsweise wenige Zentimeter. Die beiden Werkzeugaufnahmen 8, 9 des Doppelgreifers 7 weisen den gleichen Abstand zum Mittelpunkt des Schwenkkreises K auf.

Bei der dargestellten und bevorzugten Ausführungsform ist der Tragarm 6 an einem dem Doppelgreifer 7 gegenüberliegenden Ende schwenkbar gelagert. Der Tragarm 7 ist von einem Motor über eine Welle antreibbar. Die Schwenkachse S verläuft durch diese Welle.

Die beiden Werkzeugaufnahmen 8, 9 des Doppelgreifers 7 sind als elastische Klauen ausgeführt. Dies ermöglicht die Aufnahme verschiedenartiger Werkzeuge.

Bei der dargestellten und bevorzugten Ausführungsform ist das Werkzeugmagazin 10 am Fahrständer 2 angebracht und mit dem Fahrständer 2 mitfahrend ausgeführt. Dies ermöglicht kurze Wege beim Transport eines Werkzeugs 4, 5 vom Werkzeugmagazin 10 zur Spindel 11 und zurück während eines Werkzeugwechsels.

Bei der dargestellten und bevorzugten Ausführungsform weist das Werkzeugmagazin 10 einen ersten Träger 12 auf, der das Werkzeugmagazin 10 trägt und am Fahrständer 2 angebracht ist.

Außerdem weist das Werkzeugmagazin 10 hier einen zweiten Träger 12' auf. Die längste Ausdehnung des zweiten Trägers 12' verläuft in einer zur Ebene des Schwenkkreises K parallelen Ebene und auf einer Höhe oberhalb der Ebene des Schwenkkreises K.

Die Werkzeugwechselvorrichtung 1 ist hier ebenfalls am Fahrständer 2 angebracht, und zwar am zweiten Träger 12' des Werkzeugmagazins 10.

Bei der dargestellten und bevorzugten Ausführungsform ist das Werkzeugmagazin 10 als Kettenmagazin ausgeführt. Das Werkzeugmagazin 10 weist dabei ein Karussell 13 auf, das am ersten Träger 12 angebracht ist. An dem Karussell 13 ist der zweite Träger 12' des Werkzeugmagazins 10 angebracht. Entlang des Außenumfangs des Karussells 13 verläuft eine Kette 14 auf einer elliptischen Kurve. An der Kette 14 sind vom Karussell 13 wegweisende Werkzeugaufnahmen 15 angeordnet.

Die Kette 14 des Werkzeugmagazins 10 wird mittels einer Motor-Getriebekombination 16 angetrieben. Die Kette 14 des Werkzeugmagazins 10 kann angetrieben von der Motor-Getriebekombination 16 die Werkezugaufnahmen 15 des Werkzeugmagazins 10 um das Karussell 13 herum transportieren bzw. verschieben, und zwar in der Ebene des Schwenkkreises K oder einer dazu parallelen Ebene. Mittels der Kette 14 kann ein Werkzeug 5 zu einer Werkzeug-Übergabeposition des Werkzeugmagazins transportiert werden. In Fig. 1 befindet sich das Werkzeug 5 in der Werkzeug-Übergabeposition des Werkzeugmagazins 10.

Die Werkzeugaufnahmen 15 des Werkzeugmagazins 10 sind einheitlich für verschiedene einzelne Werkzeuge ausgebildet. Die Form der Werkzeugaufnahmen 15 des Werkzeugmagazins 10 entspricht der Form der Werkzeugaufnahmen 8, 9 des Doppelgreifers 7. Die Werkzeugaufnahmen 15 des Werkzeugmagazins 10 sind jedoch anders angeordnet als die Werkzeugaufnahmen 8, 9 des Doppelgreifers 7.

Die Werkzeuge 4, 5 weisen einheitliche, zu den Werkzeugaufnahmen 15 des Werkzeugmagazins 10 und den Werkzeugaufnahmen 8, 9 der Werkzeugwechselvorrichtung 1 passende Aufnahmehalterungen 17 auf. Die Aufnahmehalterungen 17 dienen als Adapter zwischen einem Werkzeug 4, 5 und einer Werkzeugaufnahme 8, 9, 15.

Bei der in Fig. 1 dargestellten und bevorzugten Ausführungsform hält der Übersichtlichkeit wegen nur eine Werkzeugaufnahme 15 des Werkzeugmagazins 10 ein Werkzeug 5. Üblicherweise halten mehrere, insbesondere alle Werkzeugaufnahmen 15 ein Werkzeug 5.

Erfindungsgemäß weist das Werkzeugmagazin 10 einen Magazingreifer 18 auf. Der Magazingreifer 18 ist zur Entnahme eines Werkzeugs 5 aus einer Werkzeugaufnahme 15 des Werkzeugmagazins 10 an der Werkzeug-Übergabeposition des Werkzeugmagazins 10 und zum Transport des Werkzeugs 5 zur Werkzeugwechselvorrichtung 1 bzw. zur ersten Werkzeug-Übergabeposition des Doppelgreifers 7 ausgebildet.

Der Magazingreifer 18 ist ferner zum Transport eines Werkzeugs 4 von der Werkzeugwechselvorrichtung 1 bzw. von der zweiten Werkzeug-Übergabeposition des Doppelgreifers 7 zu einer Werkzeugaufnahme 15 des Werkzeugmagazins 10 bzw. zur Werkzeug-Übergabeposition des Werkzeugmagazins 10 und zum Einsetzen des Werkzeugs 4 in die Werkzeugaufnahme 15 des Werkzeugmagazins 10 ausgebildet.

Der Magazingreifer 18 ist bei der dargestellten und bevorzugten Ausführungsform am zweiten Träger 12' des Werkzeugmagazins 10 angebracht. Hier ist der Magazingreifer 18 auf einer Höhe oberhalb der Kette 14 des Werkzeugmagazins 10 und auf einer Höhe oberhalb des Doppelgreifers 7 der Werkzeugwechselvorrichtung 1 angeordnet.

Das Werkzeugmagazin 10 weist bei der dargestellten und bevorzugten Ausführungsform einen Pneumatikzylinder 19 auf, mittels dessen der Magazingreifer 18 linear verfahrbar ist. Der Fahrweg des Magazingreifers 18 ist dabei so festgelegt, dass der Magazingreifer 18 bei einem Werkzeugwechsel in einer zur Ebene des Schwenkkreises K parallelen Ebene verfährt. Bei der dargestellten und bevorzugten Ausführungsform verfährt der Magazingreifer 18 entlang der längsten Ausdehnung des zweiten Trägers 12' des Werkzeugmagazins 10.

Der Magazingreifer 18 weist bei der dargestellten und bevorzugten Ausführungsform zwei Greifarme 20 auf. Diese sind an gegenüberliegenden Seiten des Magazingreifers 18 so angeordnet und so ausgebildet, dass sie ein Werkzeug 4, 5, bevorzugt an einer Aufnahmehalterung 17 des Werkzeugs 4, 5, zangenartig greifen und halten können.

Der Magazingreifer 18 ist so verfahrbar, dass er sich an der Werkzeug-Übergabeposition des Werkzeugmagazins 10 oberhalb der Kette 14 des Werkzeugmagazins 10 befindet. Die Greifarme 20 des Magazingreifers 18 sind dabei so angeordnet, dass bei Verschiebung der Kette 14 das Werkzeugmagazin 10 das Werkzeug 5 zwischen die beiden Greifarme 20 des Magazingreifers 18 geschoben werden kann. Bei der in Fig. 1 dargestellten und bevorzugten Ausführungsform sind die beiden Greifarme 20 des Magazingreifers 18 dazu auf einer zum zweiten Träger 12' des Werkzeugmagazins 10 parallelen Geraden angeordnet.

Die beiden Greifarme 20 des Magazingreifers 18 sind dabei ferner so angeordnet, dass das Werkzeug 5 aus dem Bereich zwischen den beiden Greifarmen 20 des Magazingreifers 18 mittels des Doppelgreifers 7 herausgeschwenkt werden kann, nachdem der Magazingreifer 18 das Werkzeug 5 freigegeben bzw. losgelassen hat.

Der Magazingreifer 18 und insbesondere seine Greifarme 20 verfahren also ausschließlich auf einer Geraden. Diese Gerade verläuft parallel zur längsten Ausdehnung des zweiten Trägers 12' des Werkzeugmagazins 10. Die Greifarme 20 werden also insbesondere nicht gedreht.

Bei der dargestellten und bevorzugten Ausführungsform weist der Fahrständer 2 drei Schlitten 21, 22, 23 auf, nämlich einen X-Schlitten 21, der in X-Richtung (in den Figuren also in die Zeichnungsebene hinein und aus der Zeichnungsebene heraus) verfahrbar ist, einen Y-Schlitten 22, der in Y-Richtung (in den Figuren also von links nach rechts und umgekehrt) verfahrbar ist sowie einen Z-Schlitten 23, der in Z-Richtung (in den Figuren also von oben nach unten und umgekehrt) verfahrbar ist. Die Schlitten 21, 22, 23 werden dabei jeweils mittels eines Kugelrollspindel-Antriebs und eines Servomotors verfahren.
Bei der dargestellten und bevorzugten Ausführungsform ist der erste Träger 12 des Werkzeugmagazins 10 am X-Schlitten 21 des Fahrständers 2 angebracht.

Der erste Träger 12 des Werkzeugmagazins 10 kann im Grundsatz auch am Y-Schlitten 22 des Fahrständers 2 angebracht sein. In diesem Fall ist eine Verfahrvorrichtung erforderlich, die eine Relativbewegung in Y-Richtung zwischen dem ersten Träger 12 und der Spindel 11 ermöglicht. Die Konstruktion ist also aufwendiger.

Ein Werkzeugwechsel wird mittels der Werkzeugwechselvorrichtung 1 in dem erfindungsgemäßen Bearbeitungszentrum 3 folgendermaßen durchgeführt:
Zunächst wird der Doppelgreifer 7 des Tragarms 6 zu seiner ersten Werkzeug-Übergabeposition geschwenkt. Dabei sind beide Werkzeugaufnahmen 8, 9 des Doppelgreifers 7 unbesetzt, d. h. es befinden sich keine Werkzeuge 4, 5 in den Werkzeugaufnahmen 8, 9 des Doppelgreifers 7.

Dann wird ein Werkzeug 5 von der Werkzeug-Übergabeposition des Werkzeugmagazins 10 zur ersten Werkzeug-Übergabeposition des Doppelgreifer 7 transportiert Dieser Übergabeprozess kann bereits vor oder während des Schwenkens des Doppelgreifers 7 zu dessen erster Werkzeug-Übergabeposition beginnen.

Bei diesem Übergabeprozess wird die Kette 14 des Werkzeugmagazins 10 mittels der Motor-Getriebekombination 16 so gedreht bzw. verschoben, dass das Werkzeug 5, das nachfolgend in die Spindel 11 eingesetzt werden soll (im Austausch gegen ein noch in der Spindel 11 gehaltenes Werkzeug 4), von dem Magazingreifer 18 aus der Werkzeugaufnahme 15 des Werkzeugmagazins 10, in dem das Werkzeug 5 gehalten wird, entnehmen kann. Bei der in Fig. 1 dargestellten und bevorzugten Ausführungsform wird das Werkzeug 5 dazu in dem Werkzeugmagazin 10 so verschoben, dass es sich möglichst nahe der ersten Werkzeug-Übergabeposition des Doppelgreifers 7 und möglichst nahe der Spindel 11 befindet.

Vor oder während des Verschiebens des Werkzeugs 5 im Werkzeugmagazin 10 wird der Magazingreifer 18 mit Hilfe des Pneumatikzylinders 19 so entlang der längsten Ausdehnung des zweiten Trägers 12' des Werkzeugmagazins 10 verfahren, dass sich der Magazingreifer 18 an der Werkzeug-Übergabeposition des Werkzeugmagazins 10 oberhalb der Kette 14 des Werkzeugmagazins 10 befindet. Die Greifarme 20 des Magazingreifers 18 sind dabei so angeordnet, dass bei Verschiebung der Kette 14 des Werkzeugmagazins 10 das Werkzeug 5 zwischen die beiden Greifarme 20 des Magazingreifers 18 geschoben wird. Dann ist der Magazingreifer 18 direkt oberhalb des Werkzeugs 5 positioniert. Dieser Zustand während eines Werkzeugwechsels ist in Fig. 1, insbesondere in dem Vergrößerungsausschnitt, dargestellt. Hieraus ist ersichtlich, dass die beiden Greifarme 20 des Magazingreifers 18 auf einer zur längsten Ausdehnung des zweiten Trägers 12' des Werkzeugmagazins 10 parallelen Geraden angeordnet sind.

Das Verfahren des Magazingreifers 18 zur Werkzeug-Übergabeposition des Werkzeugmagazins 10 vor oder während des Verschiebens des Werkzeugs 5 in der Kette 14 spart Zeit im Vergleich zu der Vorgehensweise, bei der der Magazingreifer 18 erst dorthin verfahren wird, nachdem das Werkzeug 5 an die Werkzeug-Übergabeposition des Werkzeugmagazins 10 verschoben worden ist.

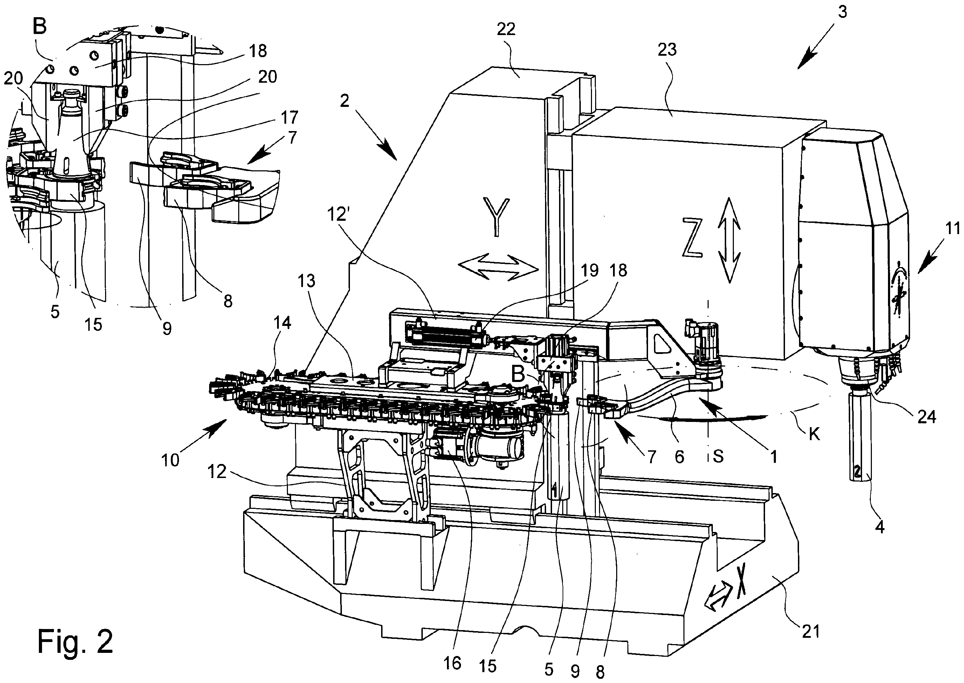

In einem folgenden Schritt des Übergabeprozesses greift der Magazingreifer 18 das Werkzeug 5 an einem oberen Ende, insbesondere an einer Aufnahmehalterung 17 des Werkzeugs 5, oberhalb der das Werkzeug 5 haltenden Werkzeugaufnahme 15 des Werkzeugmagazins 10. Dieser Zustand während des Werkzeugwechsels ist in Fig. 2 dargestellt mit einer vergrößerten Ansicht eines Bereiches um den Magazingreifer 18 und den Doppelgreifer 7 in dessen Werkzeug-übergabeposition. Wie aus Fig. 2 ersichtlich ist, wird das Werkzeug 5 zeitweise sowohl von der jeweiligen Werkzeugaufnahme 15 des Werkzeugmagazins 10 sowie dem Magazingreifer 18 gehalten. Diese Zeit wird jedoch möglichst kurz gewählt.

Anschließend gibt die jeweilige Werkzeugaufnahme 15 des Werkzeugmagazins 10 das von ihr gehaltene Werkzeug 5 frei, so dass das Werkzeug 5 nur noch vom Magazingreifer 18 gehalten wird. Der Magazingreifer 18 wird dann zusammen mit dem von ihm gehaltenen Werkzeug 5 zur ersten Werkzeug-Übergabeposition des Doppelgreifers 7 entlang der längsten Ausdehnung des zweiten Trägers 12' des Werkzeugmagazins 10 verfahren. Dabei wird das Werkzeug 5 in die eine Werkzeugaufnahme 8 des Doppelgreifers 7 verfahren. Die eine Werkzeugaufnahme 8 des Doppelgreifers 7 befindet sich dabei auf der Höhe, auf der sich die jeweilige Werkzeugaufnahme 15 des Werkzeugmagazins 10 befindet, aus der das Werkzeug 5 zuvor entnommen wurde.

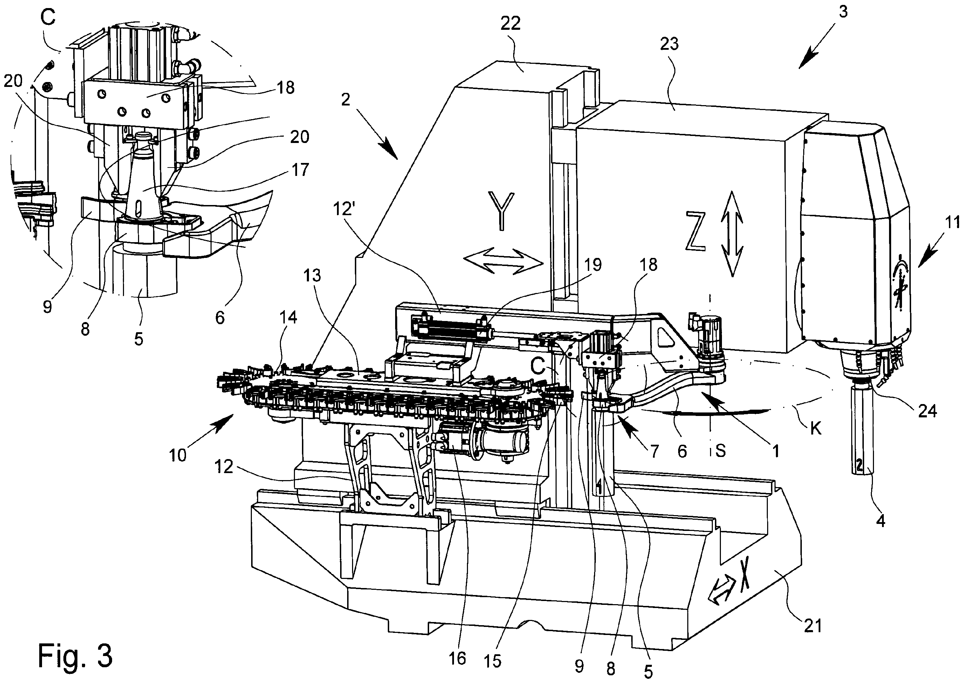

Die eine Werkzeugaufnahme 8 des Doppelgreifers 7 nimmt nun das Werkzeug 5 auf. Für eine gewisse, möglichst kurze Zeit wird das Werkzeug 5 sowohl von der einen Werkzeugaufnahme 8 des Doppelgreifers 7 als auch von dem Magazingreifer 18 gehalten. Dieser Zustand während eines Werkzeugwechsels ist in Fig. 3 dargestellt. Insbesondere aus der vergrößerten Ansicht in Fig. 3 ist ersichtlich, dass der Magazingreifer 18 dabei das Werkzeug 5 an einem Ende oberhalb der einen Werkzeugaufnahme 8 des Doppelgreifers 7 hält.

Die beiden Greifarme 20 des Magazingreifers 18 sind dabei so angeordnet, dass das Werkzeug 5 aus dem Bereich zwischen den beiden Greifarmen 20 des Magazingreifers 18 mittels des Doppelgreifers 7 herausgeschwenkt werden kann, unmittelbar nachdem der Magazingreifer 18 das Werkzeug 5 freigegeben bzw. losgelassen hat.

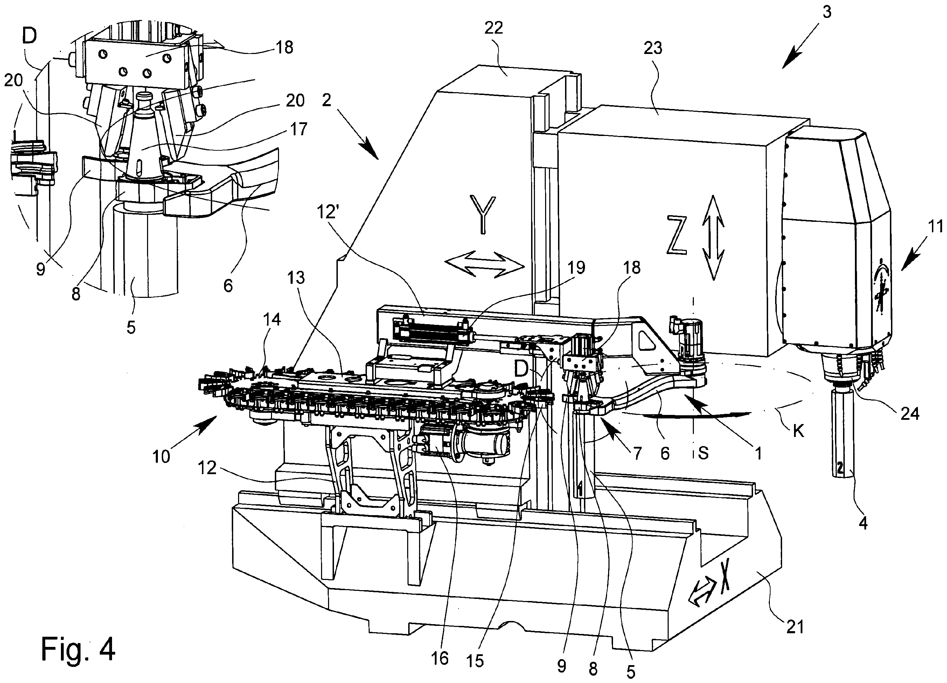

Anschließend gibt der Magazingreifer 18 das Werkzeug 5 frei, so dass das Werkzeug 5 nun nur noch von der einen Werkzeugaufnahme 8 des Doppelgreifers 7 gehalten wird. Dieser Zustand ist in Fig. 4 dargestellt. Damit ist der Übergabeprozess abgeschlossen.

Beim Übergabeprozess der dargestellten und bevorzugten Ausführungsform verfährt der Magazingreifer 18, insbesondere seine Greifarme 20, ausschließlich auf einer Geraden. Diese Gerade verläuft parallel zur längsten Ausdehnung des zweiten Trägers 12' des Werkzeugmagazins 10 und zur Ebene des Schwenkkreises K. Die Greifarme 20 werden also insbesondere nicht gedreht.

Nach dem Übergabeprozess wird das Werkzeug 5 von der ersten Werkzeug-Übergabeposition des Doppelgreifers 7 aus dem Bereich zwischen den beiden Greifarmen 20 heraus geschwenkt. Dies erfolgt unmittelbar nachdem der Magazingreifer 18 das Werkzeug 5 freigegeben bzw. losgelassen hat. Dies spart Zeit im Vergleich zu der Vorgehensweise, bei der der Magazingreifer 18 nach dem Loslassen des Werkzeugs 5 zunächst von der ersten Werkzeug-Übergabeposition des Doppelgreifers 7 weg bewegt werden muss.

Der Doppelgreifer 7 und damit das Werkzeug 5 in der einen Werkzeugaufnahme 8 des Doppelgreifers 7 werden von der ersten Werkzeug-Übergabeposition des Doppelgreifers 7 zur ersten Werkzeug-Wechselposition des Doppelgreifers 7 geschwenkt, bei der dargestellten und bevorzugten Ausführungsform um ca. 180°.

Der Doppelgreifer 7 und das Werkzeug 5 werden dabei auf einem Kreisbogen des Schwenkkreises K geschwenkt. Fig. 5 zeigt den Zustand während eines Werkzeugwechsels nach dem Schwenken von der ersten Werkzeug-Übergabeposition des Doppelgreifers 7 zur ersten Werkzeug-Wechselposition des Doppelgreifers 7. Hierbei liegen die andere Werkzeugaufnahme 9 und eine Werkzeugaufnahme 24 der Spindel 11 auf einer Geraden parallel zur Y-Richtung.

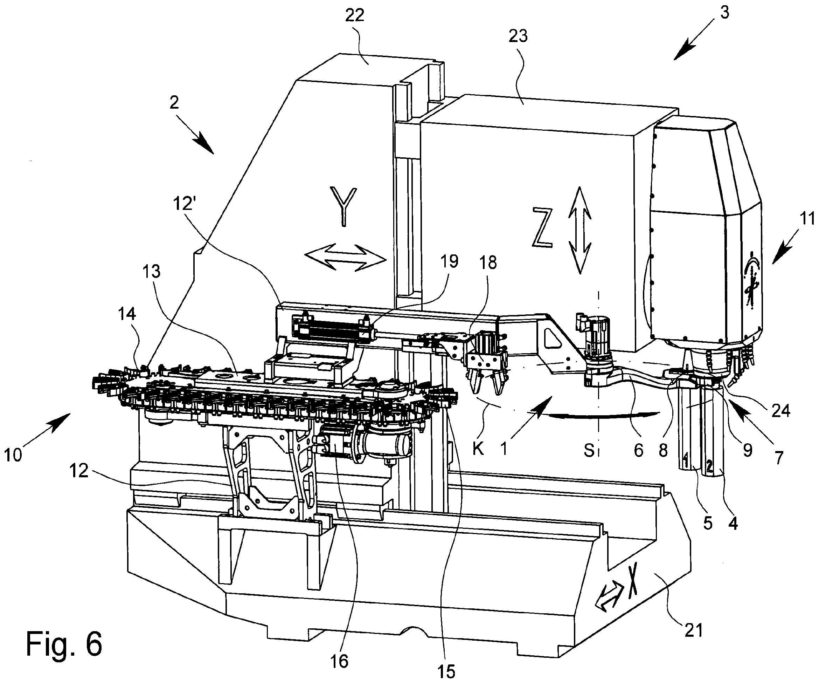

Als nächstes wird das in der Spindel 11 gehaltene Werkzeug 4 in die andere Werkzeugaufnahme 9 des Doppelgreifers 7 eingesetzt Dazu wird die Spindel 11 in Y-Richtung zu der anderen Werkzeugaufnahme 9 des Doppelgreifers 7 hin (in Fig. 5 also horizontal nach links) verfahren, und zwar so weit bis das in der Spindel 11 befindliche Werkzeug 4 sich gleichzeitig in der anderen Werkzeugaufnahme 9 des Doppelgreifers 7 befindet. Dieser Zustand ist in Fig. 6 gezeigt.

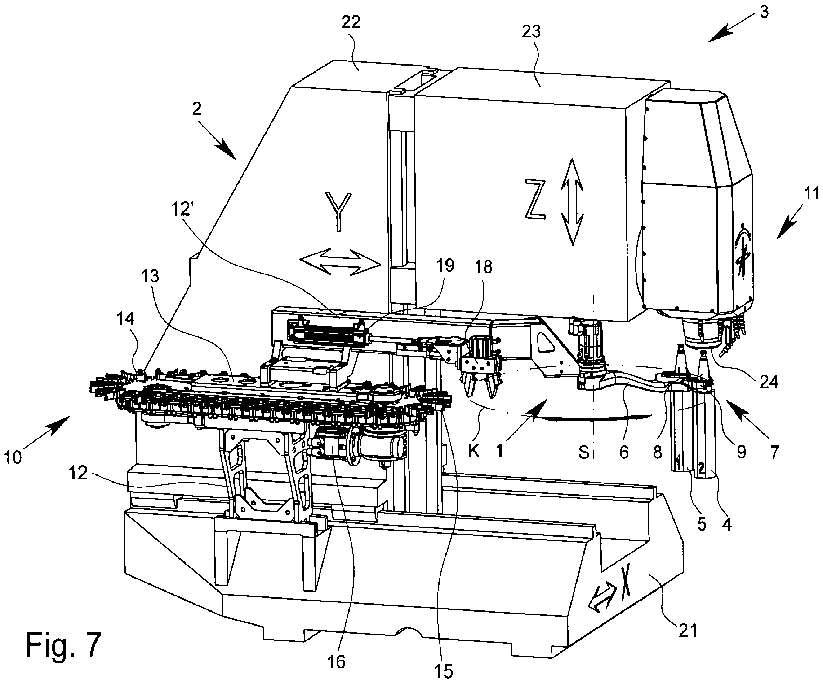

Die andere Werkzeugaufnahme 9 des Doppelgreifers 7 nimmt nun das noch in der Spindel 11 gehaltene Werkzeug 4 auf und hält es für eine gewisse Zeit gleichzeitig mit der Spindel 11. Danach wird die Spindel 11 in Z-Richtung, und zwar in Fig. 6 nach oben, verfahren. Dabei wird das Werkzeug 4 aus der Spindel 11 gelöst, so dass es nur noch in der anderen Werkzeugaufnahme 9 des Doppelgreifers 7 gehalten wird. Dieser Zustand ist in Fig. 7 gezeigt.

Anschließend wird der Doppelgreifer 7 um einen kleinen Winkel, bei der bevorzugten Ausführungsform um ca. 5°, geschwenkt, und zwar so, dass sich dann das in der einen Werkzeugaufnahme 8 des Doppelgreifers 7 befindliche Werkzeug 5 direkt unterhalb der Werkzeugaufnahme 24 der Spindel 11 und somit in der zweiten Werkzeug-Wechselposition des Doppelgreifers 7 befindet. Nach dem Schwenken des Doppelgreifers 7 von der ersten Werkzeug-Wechselposition des Doppelgreifers 7 in die zweite Werkzeug-Wechselposition des Doppelgreifers 7 befindet sich also das in der einen Werkzeugaufnahme 8 des Doppelgreifers 7 gehaltene Werkzeug 5 in der Position, die das in der anderen Werkzeugaufnahme 9 des Doppelgreifers 7 gehaltene Werkzeug 4 vor diesem Schwenken innehatte. Dieser Zustand ist in Fig. 8 gezeigt. Die erfindungsgemäße Ausgestaltung der Werkzeugwechselvorrichtung 1 ermöglicht diesen Positionswechsel durch einfaches, schnelles Verschwenken des Doppelgreifers 7.

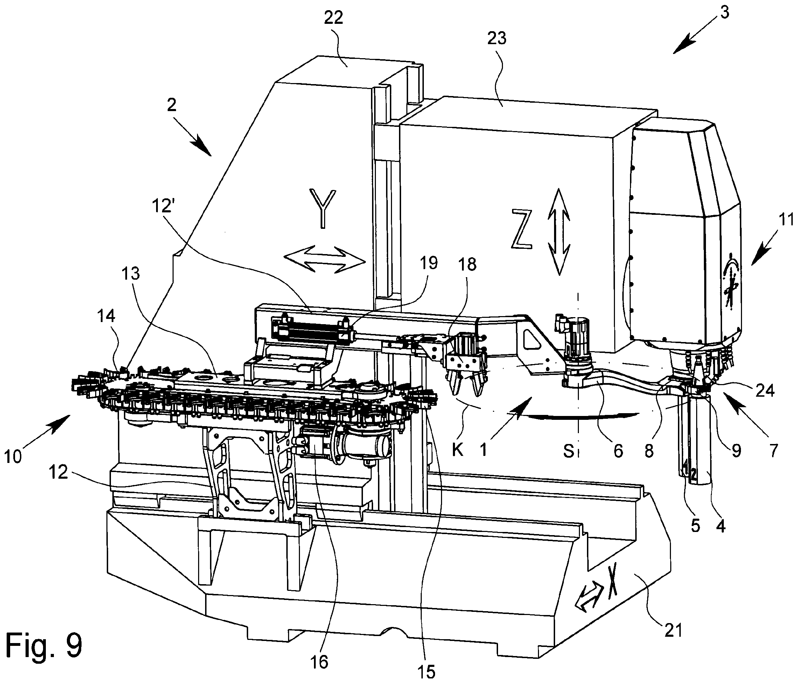

Anschließend wird die Spindel 11 in Z-Richtung zu der einen Werkzeugaufnahme 8 des Doppelgreifers 7 (in Fig. 8 also nach unten) verfahren, wobei nun das Werkzeug 5 in der einen Werkzeugaufnahme 8 des Doppelgreifers 7 in die Spindel 11 eingesetzt wird. Für eine kurze Zeit wird dann das Werkzeug 5 sowohl in der einen Werkzeugaufnahme 8 des Doppelgreifers 7 als auch in der Spindel 11 gehalten. Dieser Zustand ist in Fig. 9 gezeigt.

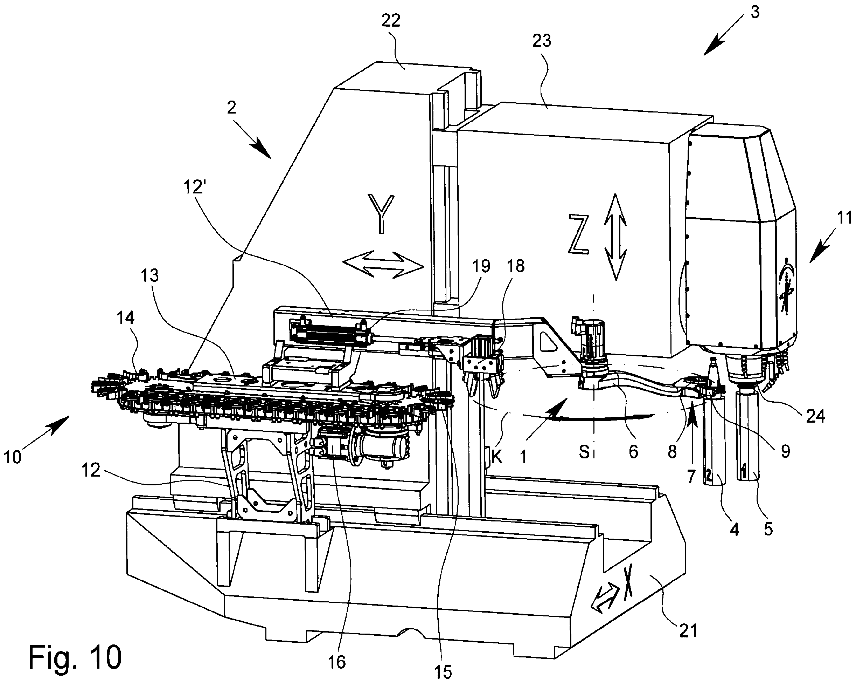

In einem folgenden Schritt wird die Spindel 11 in Y-Richtung von der einen Werkzeugaufnahme 8 des Doppelgreifers 7 weg (in Fig. 9 also nach rechts) bewegt. Dabei wird das Werkzeug 5 aus der einen Werkzeugaufnahme 8 des Doppelgreifers 7 gelöst. Nun befindet sich das Werkzeug 5, das zuvor aus dem Werkzeugmagazin 10 entnommen wurde, in der Spindel 11 und das Werkzeug 4, das zuvor in der Spindel 11 gehalten wurde, befindet sich nun in der anderen Werkzeugaufnahme 9 des Doppelgreifers 7, während die eine Werkzeugaufnahme 8 des Doppelgreifers 7 unbesetzt ist. Dieser Zustand ist in Fig. 10 gezeigt.

In einem weiteren Schritt wird das Werkzeug 4 in der anderen Werkzeugaufnahme 9 des Doppelgreifers 7 zurück zum Magazingreifer 18 und somit zur zweiten Werkzeug-Übergabeposition des Doppelgreifers 7 schwenkt. Dieser Zustand und damit die zweite Werkzeug-Übergabeposition des Doppelgreifers 7 ist in Fig. 11 gezeigt. Nun kann das Werkzeug 4 vom Magazingreifer 18 aus der anderen Werkzeugaufnahme 9 des Doppelgreifers 7 entnommen, zur Werkzeug-Übergabeposition des Werkzeugmagazins 10 verfahren und in eine Werkzeugaufnahme 15 des Werkzeugmagazins 10 eingesetzt werden. Damit ist ein Werkzeugwechsel bei der bevorzugten Ausführungsform abgeschlossen.

Bei der dargestellten Ausgestaltung der Werkzeugwechselvorrichtung 1 werden bei einem Werkzeugwechsel die Werkzeuge 4, 5 von der Werkzeugwechselvorrichtung 1 auf einem Transportweg transportiert, der ausschließlich in der Ebene des Schwenkkreises oder einer dazu parallelen Ebene verläuft. Bei der dargestellten und bevorzugten Ausführungsform ist dies stets ein Kreisbogen des Schwenkkreises K. Insbesondere werden die Werkzeuge 4, 5 durch die Werkzeugwechselvorrichtung 1 nicht in Z-Richtung, sondern nur in einer X-Y-Ebene verschwenkt.

Bei der dargestellten und bevorzugten Ausführungsform sind die Werkzeugwechselvorrichtung 1, das Werkzeugmagazin 10 und der Fahrständer 2 derart ausgebildet, dass bei einem Werkzeugwechsel sogar der gesamte Transportweg der Werkzeuge 4, 5 - also im Werkzeugmagazin 10 und von dessen Werkzeug-Übergabeposition bis hin zur zu den beiden Werkzeug-Wechselpositionen des Doppelgreifers 7 - ausschließlich in der Ebene des Schwenkkreises K oder einer dazu parallelen Ebene verläuft.

Bei einem Werkzeugwechsel wird also ausschließlich die Spindel 11 in Z-Richtung verfahren. Für die Werkzeugwechselvorrichtung 1 und das Werkzeugmagazin 10 ist kein Verfahren in Z-Richtung erforderlich.

Die dargestellte Ausführungsform stellt nur eine, allerdings bevorzugte Variante eines erfindungsgemäßen Bearbeitungszentrums 3 dar. Nicht dargestellt sind insbesondere Varianten mit mehreren Spindeln 11, mit horizontal (also in Y-Richtung bzw. X-Richtung) ausgerichteten Spindeln 11, mit mehreren Fahrständern 2, mit mehreren Werkzeugmagazinen 10, mit einer "virtuellen" Schwenkachse S und mit unterschiedlich ausgebildeten Werkzeugaufnahmen 8, 9, 15, 24.

### Bezugszeichenliste:

- 1: Werkzeugwechselvorrichtung
- 2: Fahrständer
- 3: Bearbeitungszentrum
- 4: Werkzeug
- 5: Werkzeug
- 6: Tragarm der Werkzeugwechselvorrichtung
- 7: Doppelgreifer der Werkzeugwechselvorrichtung
- 8: Werkzeugaufnahme des Doppelgreifers
- 9: Werkzeugaufnahme des Doppelgreifers
- 10: Werkzeugmagazin
- 11: Spindel
- 12: erster Träger des Werkzeugmagazins
- 12': zweiter Träger des Werkzeugmagazins
- 13: Karussell des Werkzeugmagazins
- 14: Kette des Werkzeugmagazins
- 15: Werkzeugaufnahme des Werkzeugmagazins
- 16: Motor-Getriebekombination des Werkzeugmagazins
- 17: Aufnahmehalterung eines Werkzeugs
- 18: Magazingreifer
- 19: Pneumatikzylinder des Magazingreifers
- 20: Greifarm des Magazingreifers
- 21: X-Schlitten des Fahrständers
- 22: Y-Schlitten des Fahrständers
- 23: Z-Schlitten des Fahrständers
- 24: Werkzeugaufnahme der Spindel

## Patentansprüche

1. Bearbeitungszentrum zur maschinellen Bearbeitung eines Werkstücks mittels unterschiedlicher Werkzeuge (4, 5),
mit einem Ständer (2),
mit einer werkzeugtragenden, verfahrbaren Spindel (11), die am Ständer (2) angebracht ist.
mit einem Werkzeugmagazin (10) mit einer Mehrzahl von Werkzeugaufnahmen (15) für verschiedene einzelne Werkzeuge (4, 5) und
mit einer Werkzeugwechselvorrichtung (1),
wobei die Werkzeugwechselvorrichtung (1) einen Tragarm (6) aufweist,
wobei der Tragarm (6) an einem Ende einen Doppelgreifer (7) mit zwei Werkzeugaufnahmen (8, 9) aufweist,
wobei der Tragarm (6) um eine Schwenkachse (S) schwenkbar ist, so dass sich der Doppelgreifer (7) auf einen Schwenkkreis (K) bewegt,
wobei die beiden Werkzeugaufnahmen (8, 9) des Doppelgreifers (7) parallel zueinander ausgerichtet und in Umfangsrichtung des Schwenkkreises (K) versetzt zueinander angeordnet sind und den gleichen Abstand zum Mittelpunkt des Schwenkkreises (K) aufweisen,
wobei mittels des Tragarms (6) mindestens ein Werkzeug (4, 5) von einem Werkzeugmagazin (10) des Bearbeitungszentrums (3) zu der Spindel (11) und zurück transportierbar ist,
wobei das Werkzeugmagazin (10) einen Magazingreifer (18) aufweist,
wobei der Magazingreifer (18) zur Entnahme eines Werkzeugs (5) aus einer Werkzeugaufnahme (15) des Werkzeugmagazins (10) und zum Transport eines Werkzeugs (5) zu einer der Werkzeugaufnahmen (8, 9) des Tragarms (6) ausgebildet ist und
wobei der Magazingreifer (18) zum Transport eines Werkzeugs (4) von einer der Werkzeugaufnahmen (8, 9) des Tragarms (6) zu einer Werkzeugaufnahme (15) des Werkzeugmagazins (10) und zum Einsetzen eines Werkzeugs (4) in eine Werkzeugaufnahme (15) des Werkzeugmagazins (10) ausgebildet ist,
**dadurch gekennzeichnet,**
**dass** der Ständer (2) als Fahrständer (2) ausgebildet ist, dass das Werkzeugmagazin (10) und die Werkzeugwechselvorrichtung (1) am Fahrständer (2) angebracht und mit dem Fahrständer (2) mitfahrend ausgeführt sind,
**dass** das Werkzeugmagazin (10) einen ersten Träger (12) aufweist, der das Werkzeugmagazin (10) trägt und am Fahrständer (2) angebracht ist, und dass die Werkzeugwechselvorrichtung (1) und der Magazingreifer (18) an einem zweiten Träger (12)' des Werkzeugmagazins (10) angebracht sind,
**dass** das Werkzeugmagazin (10) derart ausgebildet ist, dass der Magazingreifer (18) bei einem Werkzeugwechsel in einer zur Ebene des Schwenkkreises (K) parallelen Ebene verfahrbar ist, und
**dass** die Werkzeugwechselvorrichtung (1), der Fahrständer (2) und das Werkzeugmagazin (10) derart ausgebildet sind, dass bei einem Werkzeugwechsel der Transportweg des transportierten Werkzeugs (4, 5) ausschließlich in der Ebene des Schwenkkreises (K) oder einer dazu parallelen Ebene verläuft.

2. Werkzeugwechselvorrichtung nach Anspruch 1, **dadurch gekennzeichnet,**
**dass** der Tragarm (6) an einem dem Doppelgreifer (7) gegenüberliegenden Ende schwenkbar gelagert ist und, vorzugsweise, von einem Motor über eine Welle antreibbar ist.

3. Werkzeugwechselvorrichtung nach Anspruch 1 oder 2, **dadurch gekennzeichnet,**
**dass** die beiden Werkzeugaufnahmen (8, 9) des Doppelgreifers (7) als elastische Klauen (8, 9) ausgeführt sind.

4. Bearbeitungszentrum nach einem der Ansprüche 1 bis 3, **dadurch gekennzeichnet,**
**dass** das Werkzeugmagazin (10) einen Pneumatikzylinder (19) aufweist, mittels dessen der Magazingreifer (18) linear verfahrbar ist.

## Claims

1. Machining centre for the mechanical machining of a workpiece by means of different tools (4, 5),
having a column (2),
having a tool-carrying, displaceable spindle (11), which is attached to the column (2),
having a tool magazine (10) with a plurality of tool receptacles (15) for different individual tools (4, 5), and
having a tool-changing device (1),
wherein the tool-changing device (1) has a support arm (6),
wherein the support arm (6) has, at one end, a double gripper (7) with two tool receptacles (8, 9),
wherein the support arm (6) is pivotable about a pivot axis (S) such that the double gripper (7) moves on a pivoting circle (K),
wherein the two tool receptacles (8, 9) of the double gripper (7) are oriented parallel to one another and are arranged in a manner offset with respect to one another in the circumferential direction of the pivoting circle (K), and are at the same distance from the centre of the pivoting circle (K),
wherein, by means of the support arm (6), at least one tool (4, 5) is transportable from a tool magazine (10) of the machining centre (3) to the spindle (11) and back again,
wherein the tool magazine (10) has a magazine gripper (18),
wherein the magazine gripper (18) is configured to remove a tool (5) from a tool receptacle (15) of the tool magazine (10) and to transport a tool (5) to one of the tool receptacles (8, 9) of the support arm (6), and
wherein the magazine gripper (18) is configured to transport a tool (4) from one of the tool receptacles (8, 9) of the support arm (6) to a tool receptacle (15) of the tool magazine (10) and to insert a tool (4) into a tool receptacle (15) of the tool magazine (10), **characterized**
**in that** the column (2) is configured as a travelling column (2), in that the tool magazine (10) and the tool-changing device (1) are attached to the travelling column (2) and are embodied to travel together with the travelling column (2),
**in that** the tool magazine (10) has a first carrier (12), which carries the tool magazine (10) and is attached to the travelling column (2), and in that the tool-changing device (1) and the magazine gripper (18) are attached to a second carrier (12') of the tool magazine (10),
**in that** the tool magazine (10) is configured such that the magazine gripper (18) is displaceable in a plane parallel to the plane of the pivoting circle (K) during a tool change, and
**in that** the tool-changing device (1), the travelling column (2) and the tool magazine (10) are configured such that, during a tool change, the transport path of the transported tool (4, 5) extends only in the plane of the pivoting circle (K) or in a plane parallel thereto.

2. Tool-changing device according to Claim 1, **characterized**
**in that** the support arm (6) is mounted in a pivotable manner at an opposite end from the double gripper (7) and, preferably, is drivable by a motor via a shaft.

3. Tool-changing device according to Claim 1 or 2, **characterized**
**in that** the two tool receptacles (8, 9) of the double gripper (7) are embodied as resilient claws (8, 9).

4. Machining centre according to one of Claims 1 to 3, **characterized**
**in that** the tool magazine (10) has a pneumatic cylinder (19), by means of which the magazine gripper (18) is linearly displaceable.

## Revendications

1. Centre d'usinage destiné à l'usinage mécanique d'une pièce à usiner au moyen de différents outils (4, 5),
avec un bâti (2),
avec une broche déplaçable (11) portant les outils, qui est montée sur le bâti (2),
avec un magasin d'outils (10) doté d'une multiplicité de logements d'outil (15) pour différents outils individuels (4, 5), et
avec un dispositif de changement d'outil (1),
dans lequel le dispositif de changement d'outil (1) présente un bras porteur (6),
dans lequel le bras porteur (6) présente à une extrémité une double griffe (7) avec deux logements d'outil (8, 9),
dans lequel le bras porteur (6) peut pivoter autour d'un axe de pivotement (S), de telle manière que la double griffe (7) se déplace sur un cercle de pivotement (K),
dans lequel les deux logements d'outil (8, 9) de la double griffe (7) sont orientés parallèlement l'un à l'autre et sont disposés de façon décalée l'un par rapport à l'autre en direction périphérique du cercle de pivotement (K) et présentent la même distance du centre du cercle de pivotement (K),
dans lequel au moins un outil (4, 5) peut être transporté d'un magasin d'outils (10) du centre d'usinage (3) à la broche (11) et retour au moyen du bras porteur (6),
dans lequel le magasin d'outils (10) présente une griffe de magasin (18),
dans lequel la griffe de magasin (18) est configurée pour le prélèvement d'un outil (5) hors d'un logement d'outil (15) du magasin d'outils (10) et pour le transport d'un outil (5) vers un des logements d'outil (8, 9) du bras porteur (6), et
dans lequel la griffe de magasin (18) est configurée pour le transport d'un outil (4) d'un des logements d'outil (8, 9) du bras porteur (6) vers un logement d'outil (15) du magasin d'outils (10) et pour l'insertion d'un outil (4) dans un logement d'outil (15) du magasin d'outils (10),
**caractérisé en ce que**
le bâti (2) est un bâti mobile (2),
le magasin d'outils (10) et le dispositif de changement d'outil (1) sont installés sur le bâti mobile (2) et se déplacent avec le bâti mobile (2),
le magasin d'outils (10) présente un premier support (12), qui porte le magasin d'outils (10) et est monté sur le bâti mobile (2), et
le dispositif de changement d'outil (1) et la griffe de magasin (18) sont installés sur un deuxième support (12') du magasin d'outils (10),
le magasin d'outils (10) est configuré de telle manière que la griffe de magasin (18) soit déplaçable dans un plan parallèle au plan du cercle de pivotement (K) lors d'un changement d'outil, et
le dispositif de changement d'outil (1), le bâti mobile (2) et le magasin d'outils (10) sont configurés de telle manière que lors d'un changement d'outil le chemin de transport de l'outil transporté (4, 5) se déroule exclusivement dans le plan du cercle de pivotement (K) ou dans un plan parallèle à celui-ci.

2. Dispositif de changement d'outil selon la revendication 1, **caractérisé en ce que** le bras porteur (6) est monté de façon pivotante à une extrémité opposée à la double griffe (7) et il peut de préférence être entraîné par un moteur via un arbre.

3. Dispositif de changement d'outil selon la revendication 1 ou 2, **caractérisé en ce que** les deux logements d'outil (8, 9) de la double griffe (7) sont formés par des griffes élastiques (8, 9).

4. Centre d'usinage selon l'une quelconque des revendications 1 à 3, **caractérisé en ce que** le magasin d'outils (10) présente un cylindre pneumatique (19), au moyen duquel la pince de magasin (18) peut être déplacée linéairement.
